# EUROPEAN PATENT SPECIFICATION

(11) **EP 3 366 114 B1**
(45) Date of publication and mention of the grant of the patent: **03.04.2024**
(21) Application number: 18157885.7
(22) Date of filing: 21.02.2018
(51) Int. Cl.: A01G 9/22, A01G 9/24

(54) **SYSTEM FOR PREVENTING CONDENSATION ON CROPS**
SYSTEM ZUR VERHINDERUNG VON KONDENSATION AUF ERNTEGUT
SYSTÈME POUR EMPÊCHER LA CONDENSATION SUR LES CULTURES

(30) Priority: 24.02.2017 KR 20170024555
(43) Date of publication of application: 29.08.2018
(73) Proprietor: Korea Institute of Science and Technology, Seoul 02792 (KR)
(72) Inventor: LEE, Taeksung, 02792 Seoul (KR); KIM, Hyoungseok, 02792 Seoul (KR); KWON, Manjae, 02792 Seoul (KR); YANG, Jungseok, 02792 Seoul (KR); PARK, Soohyun, 02792 Seoul (KR); LEE, Juyoung, 02792 Seoul (KR); LEE, Unseok, 02792 Seoul (KR); JHIN, Changho, 02792 Seoul (KR); CHANG, Sungyul, 02792 Seoul (KR); NHO, Chuwon, 02792 Seoul (KR); OH, Sangrok, Gangwon-do 25451 (KR)
(74) Representative: advotec.

(56) References cited:
- EP-A1- 0 031 884
- WO-A1-2016/054846
- US-A1- 2016 066 517

## Description

### BACKGROUND OF THE INVENTION

### 1. Field of the Invention

The present invention relates to a system for preventing condensation on crops, and more specifically, for preventing condensation on the surface of the crops in a greenhouse.

### 2. Description of the Related Art

Condensation forms on the surface of the crops in a greenhouse, for example, when temperature in the greenhouse rises quicker than rising of temperature of the crops right after sunrise. Prevention for the condensation is indispensable because it causes mold and blight on the crops.

As disclosed on Japanese Patent Publication No.2003-143974 which was published on May 20, 2003, the condensation was prevented by operating a heater or dehumidifier 2 hours before sunrise to reduce the gap between the temperature inside the greenhouse and of the crops by turning the temperature up or humidity down inside the greenhouse so far.

However, the customary way had economic pressure for loss of energy cost by running the heater and the dehumidifier. Though there was endeavors to reduce the economic pressure by controlling the running hours of the machines, there is a limit to solve the general inefficiency of energy since the machines have to be run. Another state of the art document US 2016/066517 A1 discloses an installation evaluation apparatus for a greenhouse, which evaluates an amount of insolation in a planned location for installing the greenhouse. It also discloses an insolation regulation apparatus for a greenhouse, which regulates an amount of insolation reaching a crop cultivated in the greenhouse.

### SUMMARY OF THE INVENTION

The present invention is to solve the aforementioned problems of the former techniques, aiming to provide the system for preventing condensation on crops to prevent condensation without running energy facilities like the heater and the dehumidifier.

The object of the present invention is achieved by a system for preventing condensation on crops in a greenhouse according to an aspect of the present invention, comprising: a shading net for controlling quantity of incident light in the greenhouse; and a control unit for controlling the open and close of the shading net based on the trigger information on insolation to control the transpiration of the crop.

Herein, the control unit controls the shading net based on the trigger information and weather information.

According to an embodiment which is not part of the present invention the trigger information comprises sunrise time, and the control unit might control the open and close of the shading net based on the sunrise time. According to the invention the trigger information comprises the variation of the quantity of the incident light in the greenhouse for predetermined period of time, and the control unit might compare the variation of the quantity of the incident light in the greenhouse for predetermined period of time with a predetermined reference value to decide on the open or the close of the shading net.

Meanwhile, the control unit adjusts the reference value, which is related to the variation of the incident light in the greenhouse for the predetermined period of time, based on weather information.

Also, the control unit might make the shading net open if the surface temperature of the crop is beyond the dew point temperature in the greenhouse.

Also, the control unit might control the shading net based on the trigger information and dew point temperature estimated according to the transpiration of the crops.

As explained above, the present invention to control the transpiration of the crops for preventing condensation can reduce energy cost more than the former system to run energy facilities for preventing condensation.

Also, according to the present invention, the accuracy of the control can be improved based on various data such like a temperature and humidity in the greenhouse, a surface temperature of the crops, the quantity of incident light in the greenhouse, and weather information.

### BRIEF DESCRIPTION OF THE DRAWINGS

FIG. 1 is a sketchy illustration of the system for preventing condensation on crops according to an embodiment of the present invention.
FIG. 2 is the block diagram of components of the system for preventing condensation on crops according to an embodiment of the present invention.
FIG. 3 is a graph to compare degrees of condensation in sunny day and cloudy day.
FIG. 4 is a flowchart for a method of preventing condensation through the system for preventing condensation on crops according to an embodiment of the present invention.
FIG. 5 is a graph of condensation preventing effect when the system for preventing condensation on crops according to an embodiment of the present invention is applied.

### DETAILED DESCRIPTION OF THE INVENTION

Hereinafter, exemplary embodiments of the present invention will be described in detail referring to the appended drawings.

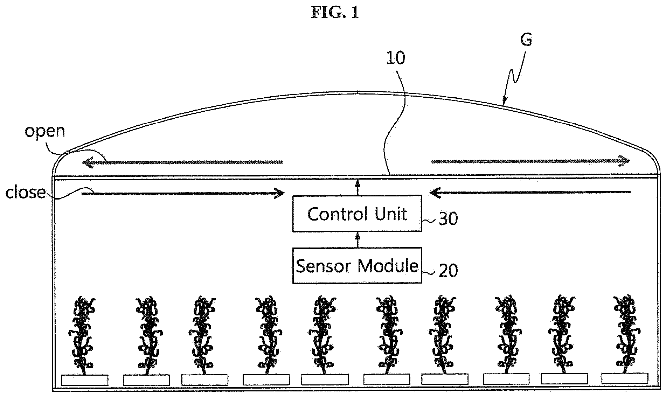

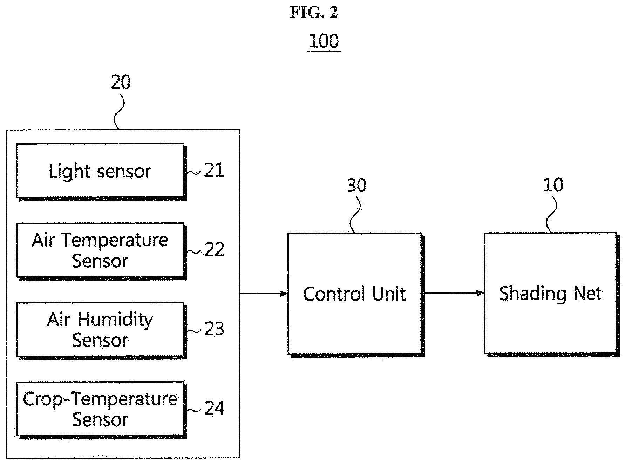

The system for preventing condensation on crops according to an embodiment of the present invention is to prevent the condensation on the crops in a greenhouse according to the present invention. FIG.1 is a sketchy illustration of the system for preventing condensation on crops according to an embodiment of the present invention, and FIG.2 is a block diagram of components of the system for preventing condensation on crops according to an embodiment of the present invention.

Referring to FIG.1 and FIG.2, the system 100 for preventing condensation on crops comprises a shading net 10, a sensor module 20, and a control unit 30.

The shading net 10 controls quantity of incident sunlight in the greenhouse G by covering the top of the greenhouse G, and it can be installed inside or outside the greenhouse as necessary.

The shading net 10 can be opened or closed automatically with being interlocked with other power plants (not shown) like motors, and installed in various forms such like foldable screen, rolled type and so on. As shown in FIG.1, the shading net can be placed inside the greenhouse G to cover the top horizontally, or to operate corresponding to the roof shape of the greenhouse G. Also, the shading net 10 blocks the incident light completely or partly according to a form and extent of the open and close. The shading net 10 is sufficient if it is possible to block the incident sunlight completely or partly, and the form of the shading net is not restricted.

Meanwhile, the shading net 10 can be composed as multilayers besides single layer to make more delicate control of the incident light. The number of the layers of the shading net 10 to be unfolded can be controlled based on amount of the incident light that has to be blocked. For example, multilayers are spaced, some layers can be controlled to be unfolded and to block the incident light relatively more, and only one layer can be controlled to be unfolded to block the incident light little.

A sensor module 20 is a module for sensing condition inside the greenhouse and it can comprises a temperature sensor 22 to measure air temperature in the greenhouse, a humidity sensor 23 to measure air humidity, a light sensor 21 to measure the incident sunlight in the greenhouse, and a contacting or non-contacting crop-temperature sensor 24 to measure the surface temperature of the crops such like fruit-temperature sensor to measure temperature of fruits or a leaf-temperature sensor to measure the temperature of the leaves.

Information from the sensor module 20 can be used for basic information to control the extent of the open and close of the shading net 10.

The control unit 30 controls a level of the quantity of the incident light by controlling the extent of the open and close of the shading net 10 based on a trigger information related to the insolation which raises the temperature in the greenhouse to prevent the condensation. Herein, the trigger information is information directly or indirectly related to the incident light that raises the temperature in the greenhouse G, and it is a basis for the selection and extent of the open or close of the shading net 10. A variation of the quantity of the incident light in the greenhouse can be used as the trigger information.

The control unit 30 can control the shading net 10 based on only one information, or combination of multiple trigger information. Meanwhile, the control unit 30 can be linked to the sensor module 20 and a timer (not shown) for time information to get the trigger information.

The increase of the incident light after the sunrise promotes the photosynthesis of the crop, then the breathe holes of the crops open and the transpiration becomes active. As a result, the transpiration increases the humidity and the rise of the humidity raises the dew point in the greenhouse that causes the condensation on the crops easily. Accordingly, the control unit 30 controls the shading net 10 based on the trigger information related to the insolation so that the extent of the incident sunlight in the greenhouse might be adjusted and the photosynthesis of the plants might be suppressed or decreased. Thus, the transpiration of the crops is suppressed or delayed so as to prevent the condensation on the crops resulted from the increase of humidity in the greenhouse.

Hereinafter, example that the control unit 30 controls the open and close of the shading net 10 based on the trigger information will be described.

First of all, for the example of the sunrise time as the trigger information, which is not part of the present invention, as the sunrise time comes the control unit 30 makes the shading net 10 cover the greenhouse so as to adjust the incident light and thus prevent the effect of the transpiration, that is, the increase of a gap between temperatures in the atmosphere and the surface of the crops which is caused by a rapid increase of humidity and evaporation heat raised by the transpiration. Herein, for the information related to the sunrise time, the data estimated from the statistical information by dates, seasons, and regions, or the forecast of the sunrise time provided from the outside can be used.

At this time, the control unit 30 can situationally delay the photosynthesis by suppressing visible light, but also make the shading net 10 allow the suitable amount of the visible light to balance the increase of the temperature of the crops with the increase of the dew point temperature due to the rise of humidity for the transpiration. To do this, the control unit 30 determines adaptively the quantity of the incident light based on the standard data of the increase of humidity due to the transpiration of the crops according to the intension of the incident light, and the information on the surface temperature of the crops monitored by the sensor module 20, and it can control a level of blocking the incident light with the shading net 10 according to the determined quantity of the incident light. In this regard, it is limited adequate for the prevention of the condensation to suppress the photosynthesis, and thus the effect on the growth of the crops is minimized.

In addition, for using as the trigger information the variation of the incident light in the greenhouse for a predetermined period of time, the quantity of the incident light increases rapidly from 0 after the sunrise, and thus the sunrise can be recognized based on the variation of the incident light in the greenhouse for the predetermined period of time. So, the control unit 30 compares the variation of the quantity of the incident light for the predetermined period of time with a predetermined reference value and makes the shading net 10 close when the variation is higher than the reference value so as to delay or decrease the transpiration.

However, as in a cloudy or rainy day, the variation of the quantity of the light is little even after the sunrise and the temperature inside the greenhouse doesn't increase rapidly, the probability of the condensation is low even without closing the shading net 10.

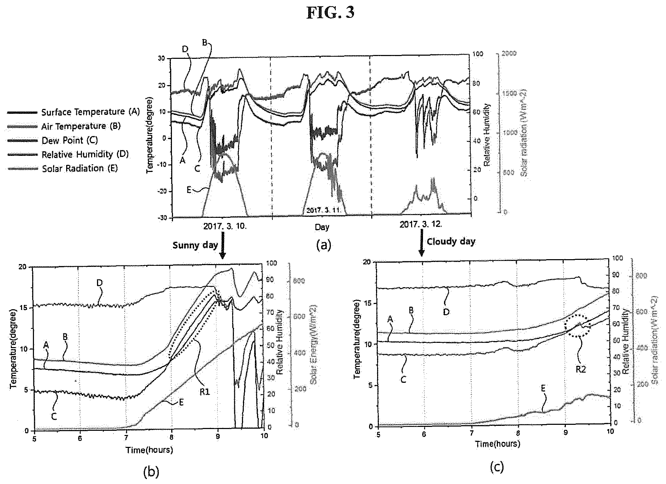

FIG.3 is a graph to describe the comparison between the extents of the condensation in a sunny day and a cloudy day. FIG.3 comprises (a) a graph by dates, (b) a graph by times of 10 March 2017, (c) a graph by times of 12 March 2017. In the graph of FIG.3, black lines show the surface temperature of the crops (A), red lines show the temperature of the air (B), blue lines show the dew point (C), green lines show the relative humidity (D), and orange lines show the solar radiation (E).

Referring to the graph (a) in FIG.3, 10 March 2017 was a sunny day with the steady curving line of the solar radiation. On the other hand, 12 March 2017 was a cloudy day with irregular line of solar radiation.

FIG.3 (b) is a graph on 10 March 2017 of the sunny day, showing the large variation of the quantity of the light versus time due to the increase of the solar radiation after the sunrise. The probability of the condensation is high in the range of the dotted line R1, because the dew point is higher than the temperature of the crops in the range of R1. It is recognized that there is the high probability of the condensation between about 8 AM and 9 AM.

Meanwhile, FIG.3 (c) is a graph on 12. March. 2017 of cloudy day, showing a smaller variation of the quantity of the light versus time after the sunrise than the FIG.3 (b). The condensation section is narrower than that in sunny day because the surface temperature of the crops is higher than the dew point, except the dotted section R2 where the dew point is higher than the surface temperature of the crops.

Therefore, using the variation of the quantity of the incident light, it is possible to recognize the weather condition of the day related to the possibility of the condensation and thus to control the close and open of the shading net 10 in specific day or time of high possibility of the condensation, that minimizes the effects on the growth of the crops.

Meanwhile, when unfolding the shading net 10 for large variation of the quantity of the light, as stated previously, the control unit 30 determines adaptively the quantity of the incident light based on the standard data of the increase of humidity due to the transpiration of the crops according to the intension of the incident light, and the information on the surface temperature of the crops monitored by the sensor module 20, and it can adjust a level of blocking the incident light with the shading net 10 according to the determined quantity of the incident light.

Thus, the control unit 30 blocks light completely or partly with the shading net 10 based on the trigger information related to the variation of the quantity of the light, etc. so as to adjust the transpiration and thus prevent the condensation.

In addition, the control unit 30 might refer to the comparison of the dew point temperature and the surface temperature of the crops as well as the trigger information for the selection of the close or open and its extent for the shading net 10.

For reference, the dew point can be calculated based on the air temperature and air humidity measured by the sensor module 20. For example, although the quantity of the light rises after the sunrise, if the comparison of the dew point with the surface temperature of the crops indicates no or ultimately low probability of the condensation then it is needless to close the shading net 10. In contrast, although the variation of the quantity of the light is small than the predetermined reference value, if the surface temperature of the crops is lower than the dew point which shows high probability of the condensation, then it is needed to close the shading net 10. Thus, the control unit 30 needs to use the various information together and it helps to prevent the condensation more efficiently. Also, with regard to the dew temperature to compare with the surface temperature of the crops for the determination of the close or open of the shading net 10, the increase of the dew temperature can be estimated based on the change of the humidity due to the transpiration according to the increase of the light after sunrise, and be used for the comparison.

Also, the control unit 30 can take weather information to control the shading net 10 with the trigger information. For example, if the weather forecast is a sunny day, the possibility of the condensation cannot be denied even though the variation of the quantity of the light is low for some period of time. Therefore, a goal to prevent the condensation can be achieved by lowering a standard value related to the variation of the quantity of the light on sunny day.

Although the condensation would be prevented by covering the shading net 10 inside the greenhouse, long-lasting covering could affect the growth of the crops and therefore it is important to determine optimal time to open the shading net 10. Therefore, the control unit 30 opens the shading net 10 to promote the photosynthesis if the surface temperature of the crops increases higher than the dew point.

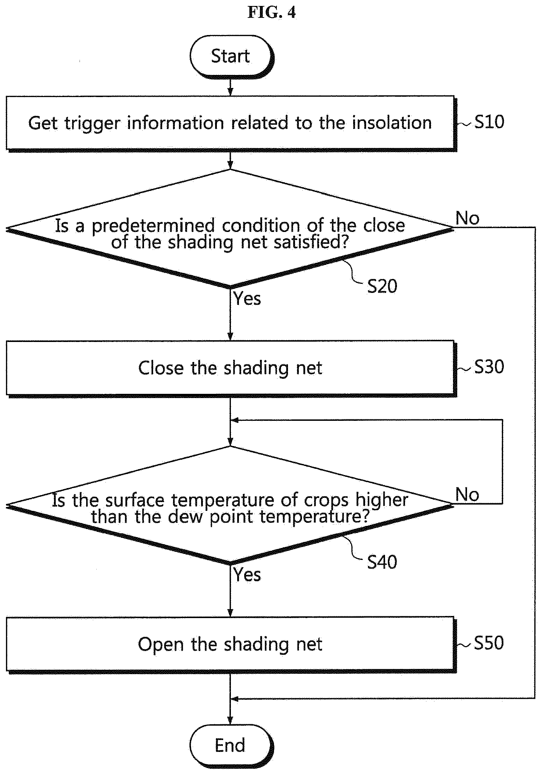

FIG.4 is a flow chart of a method to prevent the condensation on the crops in the greenhouse with the system 100 for preventing condensation on crops as aforementioned. Hereinafter, referring to FIG.4, a systematic operation of each part of the system 100 for preventing condensation on crops will be described.

Referring to FIG.4, the control unit gets the trigger information related to the insolation from the sensor module 20 or the timer (S10). The trigger information, as aforementioned, is the variation of the incident light in the greenhouse for some period of time and so on, which can help directly and indirectly to grasp the variation of the insolation which causes rapid increase of the temperature of the greenhouse for some period of time.

The control unit 30 closes the shading net 10 to control the transpiration of the crops if a predetermined condition of the close that the sunrise time comes or the variation of the quantity of the light increases from 0 to some threshold is satisfied (S20, S30).

Meanwhile, the control unit 30 can refers to both of the time information and the variation of the quantity of the light as well as one of both for the determination of the open or close of the shading net 10. For example, the condition of the close of the shading net 10 is that the sunrise time comes and the variation of the quantity of the light is more than a threshold.

Also, besides the trigger information, the control unit 30 can use the weather information which can help to anticipate or decide the condensation, the dew point temperature that calculated based on the air temperature and humidity from the sensor module 20, and surface temperature of the crops.

For example, the control unit 30 might adjust adaptively the reference value for the variation of the quantity of the light based on the weather information. The reference value would be lowered if the weather report says a sunny day, but the reference value would be increased if the weather report says a rainy or cloudy day, and the extent of changing the reference value would be varied based on the accuracy of the weather information.

Meanwhile, priority or weight can be set to each of multiple information to decide to open or close based on the multiple information.

After closing the shading net 10, the control unit 30 monitors the dew point temperature and the surface temperature of the crops and then if the surface temperature of the crops is higher than the dew point temperature it opens the shading net 10 to promote the photosynthesis of the crops(S40, S50).

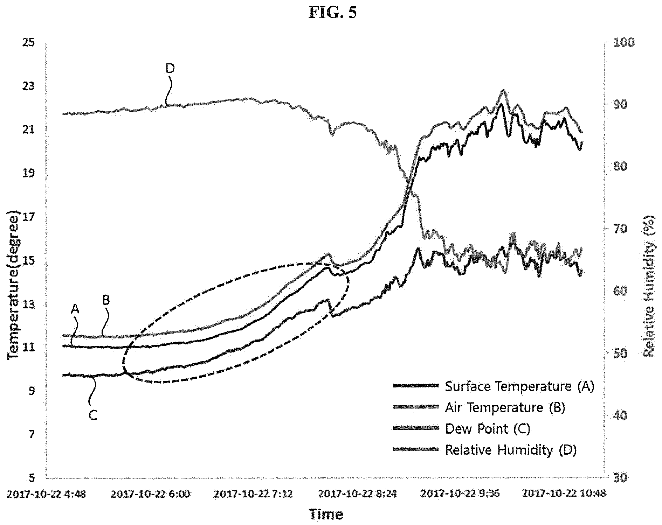

FIG.5 is a graph to show the effect of preventing condensation after applying the system 100 for preventing condensation on crops. On the graph of FIG.5, a black line shows the surface temperature of the crops (A), a red line shows the air temperature (B), a blue line shows the dew point (C), and a green line shows relative humidity (D).

Referring to FIG.5, the surface temperature of the crops (A) is higher than the dew point (C) from 4 A.M. to 10 A.M. including the sunrise time, which shows that the system 100 for preventing condensation on crops according to the embodiment of the present invention is effective to prevent the condensation on the crops.

As stated above, the system of the present invention can control the transpiration of the crops with the control of the close or open of the shading net 10 and thus prevent the condensation which is caused by both the decrease of the temperature of the crops and the increase of the humidity resulted from evaporation heat due to the transpiration. It can reduce energy cost and prevent the condensation more effectively with solving the problem of the prior arts to run energy facilities such like heater or dehumidifier.

The above description has been briefly introduced the exemplary embodiment of the present invention, but those of ordinary skill in the art can understand that various modifications, additions and substitutions will be possible without departing from the scope of the claims.

Thus, the aforementioned exemplary embodiment of the present invention has to be comprehended as an example. And the scope of the invention should be construed as equivalent to the scope of the following claims.

## Claims

1. System for preventing condensation on crops in a greenhouse, comprising:
a shading net (10) for controlling quantity of incident light in the greenhouse; and
a control unit (30) for controlling the open and close of the shading net (10) and the extent of the open or close of the shading net (10) based on the trigger information on insolation to control the transpiration of the crop,
wherein the trigger information comprises variation of the quantity of the incident light in the greenhouse for predetermined period of time due to sunrise,
wherein the control unit (30) controls the extent of the open or close of the shading net (10) based on standard data on the increase of humidity due to the transpiration of the crops according to the intensity of the incident light, and based on information regarding surface temperature of the crop, so as to adjust a level of blocking the incident light.

2. System for preventing condensation on crops according to claim 1,
wherein the control unit (30) controls the shading net (10) based on the trigger information and weather information.

3. System for preventing condensation on crops according to claim 1 or 2,
wherein the control unit (30) compares the variation of the quantity of the incident light in the greenhouse for predetermined period of time with a predetermined reference value to decide on the open or the close of the shading net (10).

4. System for preventing condensation on crops according to claim 3,
wherein the control unit (30) adjusts the reference value, which is related to the variation of the incident light in the greenhouse for the predetermined period of time, based on weather information.

5. System for preventing condensation on crops according to one of claims 1 to 4, wherein the control unit (30) makes the shading net (10) open if the surface temperature of the crop is beyond the dew point temperature in the greenhouse.

6. System for preventing condensation on crops according to one of claims 1 to 5, wherein the control unit (30) controls the shading net (10) based on the trigger information and dew point temperature estimated according to the transpiration of the crops.

## Patentansprüche

1. System zum Verhindern von Kondensation auf Kulturpflanzen in einem Gewächshaus, Folgendes umfassend:
ein Sonnenschutznetz (10) zum Steuern einer Menge von einfallendem Licht in dem Gewächshaus; und
eine Steuereinheit (30) zum Steuern des Öffnens und Schließens des Sonnenschutznetzes (10) und des Ausmaßes des Öffnens oder Schließens des Sonnenschutznetzes (10) auf der Basis der Auslöseinformationen über die Sonneneinstrahlung, um die Transpiration der Kulturpflanze zu steuern,
wobei die Auslöseinformationen eine Veränderung der Menge des einfallenden Lichts in dem Gewächshaus für eine vorbestimmte Zeitspanne aufgrund des Sonnenaufgangs umfassen,
wobei die Steuereinheit (30) das Ausmaß des Öffnens oder Schließens des Sonnenschutznetzes (10) auf der Basis von Standarddaten über die Zunahme von Feuchtigkeit aufgrund der Transpiration der Kulturpflanzen in Abhängigkeit von der Intensität des einfallenden Lichts und auf der Basis von Informationen bezüglich der Oberflächentemperatur der Kulturpflanze steuert, um einen Grad der Blockierung des einfallenden Lichts einzustellen.

2. System zum Verhindern von Kondensation auf Kulturpflanzen nach Anspruch 1, wobei die Steuereinheit (30) das Sonnenschutznetz (10) auf der Basis der Auslöseinformationen und Wetterinformationen steuert.

3. System zum Verhindern von Kondensation auf Kulturpflanzen nach Anspruch 1 oder 2,
wobei die Steuereinheit (30) die Veränderung der Menge des einfallenden Lichts in dem Gewächshaus für eine vorbestimmte Zeitspanne mit einem vorbestimmten Referenzwert vergleicht, um über das Öffnen und das Schließen des Sonnenschutznetzes (10) zu entscheiden.

4. System zum Verhindern von Kondensation auf Kulturpflanzen nach Anspruch 3, wobei die Steuereinheit (30) den Referenzwert, der mit der Veränderung der Menge des einfallenden Lichts in dem Gewächshaus für die vorbestimmte Zeitspanne zusammenhängt, auf der Basis von Wetterinformationen einstellt.

5. System zum Verhindern von Kondensation auf Kulturpflanzen nach einem der Ansprüche 1 bis 4,
wobei die Steuereinheit (30) bewirkt, dass sich das Sonnenschutznetz (10) öffnet, wenn die Oberflächentemperatur der Kulturpflanze über der Taupunkttemperatur in dem Gewächshaus liegt.

6. System zum Verhindern von Kondensation auf Kulturpflanzen nach einem der Ansprüche 1 bis 5,
wobei die Steuereinheit (30) das Sonnenschutznetz (10) auf der Basis der Auslöseinformationen und der Taupunkttemperatur, die in Abhängigkeit von der Transpiration der Kulturpflanzen geschätzt wird, steuert.

## Revendications

1. Système pour empêcher la condensation sur des cultures dans une serre, ledit système comprenant :
un filet d'ombrage (10) pour contrôler une quantité de lumière incidente dans la serre ; et
une unité de contrôle (30) pour contrôler l'ouverture et la fermeture du filet d'ombrage (10) et l'étendue de l'ouverture ou la fermeture du filet d'ombrage (10) sur la base des informations de déclenchement sur l'insolation pour contrôler la transpiration de la culture,
dans lequel les informations de déclenchement comprennent une variation de la quantité de la lumière incidente dans la serre pour une période de temps prédéterminée en raison du lever du soleil,
dans lequel l'unité de contrôle (30) contrôle l'étendue de l'ouverture ou la fermeture du filet d'ombrage (10) sur la base de données standard sur l'augmentation de l'humidité en raison de la transpiration des cultures en fonction de l'intensité de la lumière incidente et sur la base d'informations concernant la température de surface de la culture pour ajuster un niveau de blocage de la lumière incidente.

2. Système pour empêcher la condensation sur des cultures selon la revendication 1, dans lequel l'unité de contrôle (30) contrôle le filet d'ombrage (10) sur la base des informations de déclenchement et des informations météorologiques.

3. Système pour empêcher la condensation sur des cultures selon la revendication 1 ou 2,
dans lequel l'unité de contrôle (30) compare la variation de la quantité de la lumière incidente dans la serre pour une période de temps prédéterminée avec une valeur de référence prédéterminée pour décider de l'ouverture ou la fermeture du filet d'ombrage (10).

4. Système pour empêcher la condensation sur des cultures selon la revendication 3, dans lequel l'unité de contrôle (30) ajuste la valeur de référence qui est liée à la variation de la lumière incidente dans la serre pour la période de temps prédéterminée sur la base d'informations météorologiques.

5. Système pour empêcher la condensation sur des cultures selon l'une quelconque des revendications 1 à 4,
dans lequel l'unité de contrôle (30) provoque que le filet d'ombrage (10) s'ouvre si la température de surface de la culture est supérieure à la température de rosée dans la serre.

6. Système pour empêcher la condensation sur des cultures selon l'une quelconque des revendications 1 à 5,
dans lequel l'unité de contrôle (30) contrôle le filet d'ombrage (10) sur la base des informations de déclenchement et de la température de rosée estimée en fonction de la transpiration des cultures.
